# EUROPÄISCHE PATENTANMELDUNG

(11) **EP 4 506 860 A1**
(43) Veröffentlichungstag der Anmeldung: **12.02.2025**
(21) Anmeldenummer: 23190841.9
(22) Anmeldetag: 10.08.2023
(51) Int. Cl.: G06N 3/098, G06N 20/00

(54) **VERFAHREN ZUM ANLERNEN EINES MATHEMATISCHEN MODELLS AUF BASIS EINES VERTEILTEN LERNENS MITTELS EINES ANLERNSYSTEMS, COMPUTERPROGRAMMPRODUKT, COMPUTERLESBARES SPEICHERMEDIUM SOWIE ANLERNSYSTEM**

(71) Anmelder: Siemens Aktiengesellschaft, 80333 München (DE)
(72) Erfinder: Chen, Haokun, 81549 München (DE); Krompaß, Denis, 85591 Vaterstetten (DE)
(74) Vertreter: Siemens Patent Attorneys

(57) **Zusammenfassung**

Die Erfindung betrifft ein Verfahren zum Anlernen eines mathematischen Modells (12), mit den Schritten: Bereitstellen eines anzulernenden Modells (26) mittels einer zentralen elektronischen Recheneinrichtung (14); Bereitstellen von zumindest einem Hyperparameter (β); Übertragen des anzulernenden Modells (26) mit dem Hyperparameter (β) an zumindest ein erstes Endgerät (16) und Übertragen des anzulernenden Modells (26) mit dem Hyperparameter (β) an zumindest ein zweites Endgerät (18); Anlernen des anzulernenden Modells (26) mit dem Hyperparameter (β) mit einem ersten Datensatz (28) des ersten Endgeräts (16) und Anlernen des anzulernenden Modells (26) mit dem Hyperparameter (β) mit einem zweiten Datensatz (30) des zweiten Endgeräts (18); Übermitteln des jeweiligen angelernten mathematischen Modells (24a, 24b) von dem jeweiligen Endgerät (16, 18) an die zentrale elektronische Recheneinrichtung (14); Bewerten der jeweils angelernten Modelle (24a, 24b); und Anpassen des Hyperparameters (β) in Abhängigkeit von der Bewertung. Ferner betrifft die Erfindung ein Computerprogrammprodukt, ein computerlesbares Speichermedium sowie ein Anlernsystem (10).

## Beschreibung

Die Erfindung beschäftigt sich mit einem Verfahren zum Anlernen eines mathematischen Modells auf Basis eines verteilten Lernens mittels eines Anlernsystems gemäß dem geltenden Patentanspruch 1. Ferner betrifft die Erfindung ein Computerprogrammprodukt, ein computerlesbares Speichermedium sowie ein Anlernsystem.

Aus dem Stand der Technik ist bereits das sogenannte verteilte Lernen, welches auch als föderiertes Lernen (FL bzw. federated learning) bezeichnet werden kann, bekannt und es müssen hierbei entsprechende Hyperparameter abgestimmt werden. Insbesondere ist hierbei der Datenschutz der einzelnen Clients, insbesondere der Endgeräte, von entscheidender Bedeutung. Dabei kann davon ausgegangen werden, dass das verteilte Lernen bei einem aktiven Endgerät das von der zentralen elektronischen Recheneinrichtung verteilte Modell übernimmt und das mit den lokalen Trainingsdaten optimiert mathematische Modell zurückgesendet wird und eine sogenannte Server-Aggregation durchführt, die die zurückgesendeten optimierten Modelle der aktiven Endgeräte übernimmt und sie als Modellinitialisierung für die nächste Kommunikation aggregiert.

Bei dieser Abstimmung gibt es zwei wesentliche Herausforderungen. Die Daten sind über verschiedene Endgeräte oder Clients verteilt und können aufgrund von Datenschutzbedenken nicht auf einen zentralen Server aggregiert werden. Die traditionellen Methoden zur Abstimmung von Hyperparametern basieren jedoch immer auf der Verwendung mehrerer Hyperparameterkonfiguration und hängen von der Validierungsleistung des gesamten verteilten Lernsystems ab. Daher sind diese Methoden für die bestimmte Abstimmung sehr kostspielig und nicht für diesen Aufbau geeignet. Ferner sind oft auch die Rechenleistung und die Kommunikationsfähigkeit der Geräte begrenzt, sodass die optimierungsbasierten Hyperparameter-Abstimmungsmethoden nicht für das föderierte Lernen geeignet sind.

Aufgabe der vorliegenden Erfindung ist es ein Verfahren, ein Computerprogrammprodukt, ein computerlesbares Speichermedium sowie ein Anlernsystem zu schaffen, mittels welchem verbessert ein Anlernen eines mathematischen Modells realisiert werden kann.

Diese Aufgabe wird durch ein Verfahren, ein Computerprogrammprodukt, ein computerlesbares Speichermedium sowie ein Anlernsystem gemäß den unabhängigen Patentansprüchen gelöst. Vorteilhafte Ausgestaltungsformen sind in den Unteransprüchen angegeben.

Ein Aspekt der Erfindung betrifft ein Verfahren zum Anlernen eines mathematischen Modells auf Basis eines verteilten Lernens mittels eines Anlernsystems. Es wird das anzulernende Modell mittels einer zentralen elektronischen Recheneinrichtung des Anlernsystems bereitgestellt. Es wird zumindest ein Hyperparameter zum Anlernen des mathematischen Modells mittels der elektronischen Recheneinrichtung bereitgestellt. Das anzulernende mathematische Modell wird mit dem Hyperparameter an ein erstes Endgerät des Anlernsystems übertragen und es wird das anzulernende mathematische Modell mit dem Hyperparameter an ein zum ersten Endgerät separates zweites Endgerät des Anlernsystems mittels der Übertragungseinrichtung übertragen. Es erfolgt ein Anlernen des anzulernenden mathematischen Modells mit dem Hyperparameter mit einem ersten Datensatz des ersten Endgeräts und ein Anlernen des anzulernenden mathematischen Modells mit dem Hyperparameter mit einem zweiten Datensatz des zweiten Endgeräts. Es erfolgt dann wiederum das Übermitteln des jeweiligen angelernten mathematischen Modells von dem jeweiligen Endgerät an die elektronische Recheneinrichtung. Die jeweils angelernten mathematischen Modelle werden mittels der elektronischen Recheneinrichtung bewertet und es erfolgt ein Anpassen des Hyperparameters in Abhängigkeit von der Bewertung mittels der elektronischen Recheneinrichtung.

Insbesondere kann somit die Abstimmung der Hyperparameter beim verteilten Lernen auf den verteilten Endgeräten verbessert werden, bei dem das mathematische Modell, beispielsweise ein maschinelles Lernmodell, über eine Server(elektronische Recheneinrichtung)-Client(Endgerät)-Kommunikation und ohne Zugriff auf den lokalen Datensatz eines jeden Endgeräts trainiert wird. Insbesondere werden somit Vektoren der Hyperparameter, die in diesem Verfahren verwendet werden, optimiert. Insbesondere werden die entsprechenden Hypervektoren für das lokale Trainieren entsprechend angepasst.

Insbesondere für den Datenschutz wird ein maschinelles Lernmodell mit verteilten Datenquellen trainiert, ohne das ein direkter Zugriff auf deren Daten möglich ist, z.B. bei Fertigungsszenarien von verschiedenen Kunden. Daher wird eine verteilte Lernumgebung bereitgestellt, in der jedes Endgerät, bspw. von einem Kunden, seine privaten Daten auf seinen lokalen Server speichert und die Originaldaten nicht an die zentrale elektronische Recheneinrichtung übermittelt werden muss. Diese lokalen Endgeräte sind in der Lage, mit dem zentralen Server, insbesondere der zentralen elektronischen Recheneinrichtungen, zu kommunizieren, der die von den verschiedenen Endgeräten erhaltenen Informationen auf sichere Weise zusammenfasst, z.B. durch sichere Aggregation. Dadurch kann die Leistung des endgültigen aggregierten mathematischen Modells verbessert werden, indem eine Hyperparameterkonfiguration gefunden wird, z.B. eine Lernrate, Schrittgröße und der Gleichen, die am besten für das verteilte Lernen geeignet ist.

Gemäß dem Stand der Technik für verteiltes Lernen initialisiert die elektronische Recheneinrichtung zunächst ein Deep-Learning-Modell. Danach werden Kopien dieses Deep-Learning-Modells an die Endgeräte gesendet, wo jedes Endgerät dann lokal mit den privaten Daten für eine vorbestimmte Anzahl von Iterationen trainiert wird. Während des Trainings findet eine Kommunikation statt, bei der die optimierten Modelle der Endgeräte an die zentrale elektronische Recheneinrichtung gesendet werden, die dann wiederum die Hyperparameter zu einem einzigen Modell zusammenfasst und übermittelt. Dieses neue mathematische Modell wird dann an die Endgeräte zugeschickt, wo es weiter trainiert wird.

Das Ziel dieses Verfahrens ist die Optimierung eines maschinellen Lernmodells unter Verwendung verteilter Datenquellen und unter Berücksichtigung des gesamten Kommunikationsbudgets Rₘ. Dies wird durch die Abstimmung der Hyperparameter während des Prozesses erreicht.

Insbesondere weist das vorgeschlagene Verfahren einen entsprechenden Suchraum auf. Beispielsweise ist gegenüber dem Stand der Technik die Anzahl der angewendeten Hyperparameter in dem Suchraum vergrößert. Dadurch kann die Leistungsfähigkeit in Bezug auf die Testgenauigkeit erhöht werden. Insbesondere ist somit eine populationsbasierte Abstimmung mittels einer evolutionären Methode vorgeschlagen, die die Hyperparameter durch Entwicklung der Werte abstimmt, anstatt die traditionelle gradientenbasierte Optimierung anzuwenden, die sehr zeitaufwendig ist. Daher eignet sich das vorgeschlagene Verfahren besser für die Abstimmung großer, realer verteilter Lernsysteme, die mehr Daten und komplexe maschinelle Lernmodelle verwenden.

Gemäß einer vorteilhaften Ausgestaltungsform werden die zumindest zwei angelernten mathematischen Modelle mittels der elektronischen Recheneinrichtung zu einem neuen mathematischen Modell auf Basis eines weiteren Hyperparameters aggregiert. Insbesondere weist somit die zentrale elektronische Recheneinrichtung einen weiteren Hyperparameter auf, welcher zum Aggregieren der übermittelten angelernten mathematischen Modelle dient. Insbesondere sind somit zwei Hyperparameter, insbesondere Hyper-Vektoren, vorgesehen, jeweils ein Hyperparameter für die Endgeräte und ein Hyperparameter für die zentrale elektronische Recheneinrichtung. Somit kann zuverlässig das mathematische Modell angelernt werden.

Ebenfalls vorteilhaft ist, wenn das neue mathematische Modell zum Anlernen an das zumindest erste Endgerät und das zweite Endgerät übertragen wird. Insbesondere ist somit ermöglicht, dass nach dem Anpassen bzw. Aggregieren des mathematischen Modells zum neuen mathematischen Modell dieses wieder zurück an die Endgeräte übermittelt wird. Die Endgeräte sind dann wiederum dazu ausgebildet, erneu mit ihren Datensätzen das neue mathematische Modelle anzulernen und wiederum an die elektronische Recheneinrichtung zurückzusenden. Somit finden mehrere Iterationsschritte statt, um das mathematische Modell anzulernen. Insbesondere ist vorgesehen, dass mehr als zwei Iterationsschritte vorgesehen sind, um das mathematische Modell entsprechend anzulernen.

Ferner hat es sich als vorteilhaft erwiesen, wenn der weitere Hyperparameter auf Basis der übertragenen mathematischen Modelle angepasst wird. Insbesondere ist somit vorgesehen, dass auch der weitere Hyperparameter, insbesondere intern auf der zentralelektronischen Recheneinrichtung, entsprechend angepasst wird, je nachdem, wie die mathematischen Modelle durch die Endgeräte angelernt wurden. Somit werden die zwei Hyperparameter entsprechend angepasst, wodurch ein verbessertes Anlernen des mathematischen Modells realisiert werden kann.

Es hat sich weiterhin als vorteilhaft erwiesen, wenn als Hyperparameter ein Gewichtungsfaktor im mathematischen Modell und/oder eine Übertragungshäufigkeit des mathematischen Modells und/oder ein Hypervektor bereitgestellt werden. Bei dem Hypervektor handelt es sich auch insbesondere um ein sogenanntes hyperdimensionales Rechnen, wobei dies ein Berechnungsansatz, insbesondere bereits durch künstliche Intelligenz, darstellt, bei dem Informationen als hyperdimensionaler langer Vektor, d.h. als Zahlenfeld, dargestellt werden. Ein hyperdimensionaler Vektor kann tausende von Zahlen enthalten, die einen Punkt in einem Raum mit tausenden von Dimensionen darstellen. Unter der Übertragungshäufigkeit ist insbesondere ein Rundenzähler (ct) vorgesehen. Hiermit kann insbesondere beschrieben werden, wie oft eine entsprechende Übertragung des mathematischen Modells, also die Häufigkeit der Iterationsschritte, zwischen der zentralelektronischen Recheneinrichtung und den Endgeräten durchgeführt wird, mit anderen Worten, wie oft ein Iteration des mathematischen Modells durchzuführen ist. Beim Gewichtungsfaktor kann insbesondere bestimmt werden, wie hoch die entsprechenden Gewichte innerhalb des mathematischen Modells ausgestaltet sind. Somit kann zuverlässig das Anlernen des mathematischen Modells realisiert werden.

Ferner hat es sich als vorteilhaft erwiesen, wenn der Hyperparameter in Abhängigkeit von einem vorgegebenen Kommunikationsvolumen bestimmt wird. Insbesondere kann somit vorher vorgegeben werden, wie viel Datenvolumen beispielsweise zum Anlernen zu nutzen ist. Auf Basis des vorgegebenen Datenvolumens kann dann bestimmt werden, beispielsweise wie häufig eine Kommunikation und somit ein Übertragen des mathematischen Modells zwischen der elektronischen Recheneinrichtung und den Endgeräten durchzuführen ist. Auf Basis dessen kann wiederum zuverlässig in Abhängigkeit des Kommunikationsvolumens das mathematische Modell angelernt werden.

Eine weitere vorteilhafte Ausgestaltungsform sieht vor, dass zusätzlich der Hyperparameter in Abhängigkeit von einem vorgegebenen Veränderungswert für den Hyperparameter angepasst wird. Insbesondere sollen somit entsprechende Faktoren vorgegeben werden, beispielsweise in Form einer kleinen zufälligen Zahl, für den Hyperparameter, um auf Basis dessen wiederum eine Anpassung des Hyperparameters vorzunehmen. Insbesondere kann der weitere Hyperparameter auf Basis dieses Veränderungswerts entsprechend angepasst werden. Somit kann der Suchraum für eine Hyperparametersuche entsprechend vergrößert werden, wodurch ein zuverlässiges Anlernen des mathematischen Modells realisiert werden kann.

Weiterhin vorteilhaft ist, wenn die Auswertung auf Basis einer Leistung des mathematischen Modells bewertet wird. Insbesondere wir somit jedes übertragene mathematische Modell eines Endgeräts bezüglich ihrer Leistung von der zentralen elektronischen Recheneinrichtung bewertet. Das leistungsfähigere Modell bekommt dann wiederum einen höheren Gewichtungsfaktor und wird bspw. mit anderen entsprechend mathematischen Modellen aggregiert. Somit werden Ausreißer, mit einer geringen Leistungsfähigkeit entsprechend aussortiert und lediglich mathematische Modelle weiter genutzt, welche entsprechend hohe Leistungsqualität aufweisen. Das aggregierte Modell, insbesondere aus den leistungsfähigen mathematischen Modellen aggregiert, wird dann wiederum an die Endgeräte übertragen, wobei dann erneut Datensätze angewendet werden, zum Anlernen. Somit kann ein leistungsfähiges maschinelles mathematisches Modell bereitgestellt werden.

Ebenfalls vorteilhaft ist, wenn die Leistung auf Basis eines Validierungsfehlers bewertet wird. Bei dem Validierungsfehler, welcher auch zu Validierungsverlust (validation lost) bezeichnet werden kann, handelt es sich um eine Metrik, die verwendet wird, um die Leistung des maschinellen Modells, insbesondere des mathematischen Modells, auf den Validierungssatz zu bewerten. Der Validierungssatz ist ein Teil des Datensatzes, der bei Seite gelegt wird, um die Leistung des Modells zu validieren. Der Validierungsverlust ist ähnlich wie ein Trainingsverlust und wird aus der Summer der Fehler für jedes Beispiel im Validierungssatz berechnet. Somit kann zuverlässig die Leistung des mathematischen Modells bewertet werden.

Eine weitere vorteilhafte Ausgestaltungsform sieht vor, dass als das mathematische Modell eine künstliche Intelligenz angelernt wird. Insbesondere kann die künstliche Intelligenz als maschinelles Lernen bzw. neuronales Netzwerk bereitgestellt werden. Somit kann zuverlässig eine künstliche Intelligenz mittels des Verfahrens angelernt werden.

Bei dem vorgestellten Verfahren handelt es sich insbesondere um ein computerimplementiertes Verfahren. Daher betrifft ein weiterer Aspekt der Erfindung ein Computerprogrammprodukt mit Programmcodemitteln, welche eine elektronische Recheneinrichtung dazu veranlassen, wenn die Programmcodemittel von der elektronischen Recheneinrichtung abgearbeitet werden, ein Verfahren nach dem vorhergehenden Aspekt durchzuführen.

Ferner betrifft die Erfindung daher auch ein computerlesbares Speichermedium mit dem Computerprogrammprodukt.

Ein nochmals weiterer Aspekt der Erfindung betrifft ein Anlernsystem zum Anlernen eines mathematischen Modells auf Basis eines verteilten Lernens, mit zumindest einer elektronischen Recheneinrichtung, einem ersten Endgerät und einem zweiten Endgerät, wobei das Anlernsystem zum Durchführen eines Verfahrens nach dem vorhergehenden Aspekt ausgebildet ist. Insbesondere wird das Verfahren mittels des Anlernsystems durchgeführt.

Vorteilhafte Ausgestaltungsform des Verfahrens ist als vorteilhafte Ausgestaltungsform des Computerprogrammprodukts, des computerlesbaren Speichermediums sowie des Anlernsystems anzusehen. Das Anlernsystem weist hierzu gegenständliche Merkmale auf, um entsprechende Verfahrensschritte durchführen zu können.

Hier und im Folgenden kann das mathematische Modell, insbesondere ein künstliches neuronales Netzwerk, als Softwarecode verstanden werden, der auf einem computerlesbaren Speichermedium gespeichert ist und eines oder mehrere vernetzte künstliche Neuronen repräsentiert beziehungsweise deren Funktion nachbilden kann. Der Softwarecode kann dabei auch mehrere Softwarecodekomponenten beinhalten, die beispielsweise unterschiedliche Funktionen haben können. Insbesondere kann ein künstliches neuronales Netzwerk ein nichtlineares Modell oder einen nichtlinearen Algorithmus implementieren, das beziehungsweise der eine Eingabe auf eine Ausgabe abbildet, wobei die Eingabe durch einen Eingangsmerkmalsvektor oder eine Eingangssequenz gegeben ist und die Ausgabe beispielsweise eine ausgegebenen Kategorie für eine Klassifizierungsaufgabe, einen oder mehrere prädizierte Werte oder eine prädizierte Sequenz beinhalten kann.

Unter einer Recheneinheit/elektronische Recheneinrichtung/Endgerät kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "applicationspecific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt wird.

Unabhängig vom grammatikalischen Geschlecht eines bestimmten Begriffes sind Personen mit männlicher, weiblicher oder anderer Geschlechteridentität mit umfasst.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Dabei zeigt:

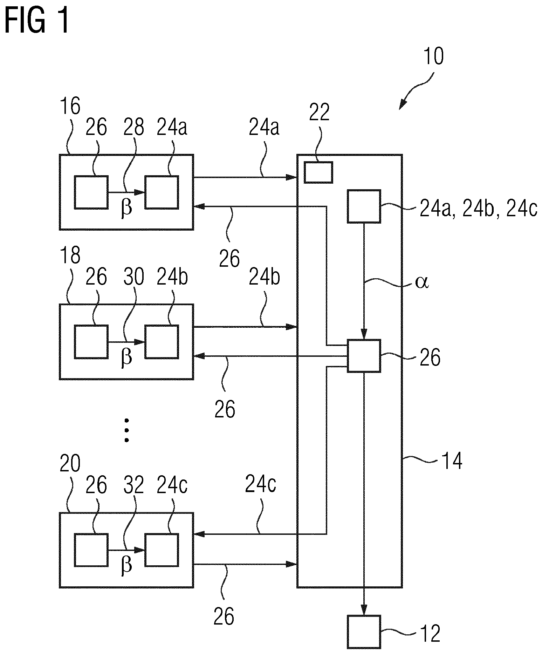

FIG 1 ein schematisches Blockschaltbild gemäß einer Ausführungsform des Verfahrens.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

Fig. 1 zeigt ein schematisches Blockschaltbild gemäß einer Ausführungsform eines Anlernsystems 10. Das Anlernsystem 10 ist zum Anlernen eines mathematischen Modells 12 ausgebildet. Das Anlernsystem 10 ist dazu ausgebildet auf Basis eines verteilten Lernens das mathematische Modell 12 anzulernen. Hierzu weist das Anlernsystem 10 zumindest eine zentrale elektronische Recheneinrichtung 14 sowie zumindest ein erstes Endgerät 16, ein zweites Endgerät 18, sowie im vorliegenden Ausführungsbeispiel noch ein drittes Endgerät 20 auf. Es ist selbstverständlich, dass auch weitere Endgeräte 16, 18, 20 zum Anlernen genutzt werden können.

Ferner weist das Anlernsystem 10 zumindest eine Übertragungseinrichtung 22 auf, welche dazu ausgebildet ist, dass mathematische Modell 12 an die Endgeräte 16, 18, 20 zu übertragen und wiederum angelernte mathematische Modelle 24 von den Endgeräten 16, 18, 20 zu empfangen. Insbesondere zeigt somit die Fig. 1 das Verfahren zum Anlernen des mathematischen Modells 12. Es wird ein anzulernendes mathematisches Modell 26 mittels der zentralen elektronischen Recheneinrichtung 14 bereitgestellt. Es wird zumindest ein Hyperparameter β zum Anlernen des anzulernenden Modells 26 bereitgestellt. Es erfolgt das Übertragen des anzulernenden mathematischen Modells 26 mit dem Hyperparameter β an das erste Endgerät 16 und das Übertragen des anzulernenden mathematischen Modells 26 an das zum ersten Endgerät 16 separat ausgebildete zweite Endgerät 18. Ferner erfolgt im folgenden Ausführungsbeispiel noch das Übertragen des anzulernenden mathematisches Modells 26 an das dritte Endgerät 20. Hierzu wird insbesondere die Übertragungseinrichtung 22 verwendet. Es folgt dann das Anlernen des anzulernenden mathematisches Modells 26 mit dem Hyperparameter β mit einem ersten Datensatz 28 im ersten Endgerät 16 und das Anlernen des anzulernenden mathematisches Modells 26 mit einem zweiten Datensatz 30. Es wird das jeweilig angelernte mathematische Modell 24a, 24b, 24c von dem jeweiligen Endgerät 16, 18, 20 an die zentrale elektronische Recheneinrichtung 14 zurückgesendet. Insbesondere erfolgt im vorliegenden Ausführungsbeispiel das Zurücksenden eines ersten angelernten mathematischen Modells 24a von dem ersten Endgerät 16, ein Zurücksenden eines zweiten angelernten mathematischen Modells 24b durch das zweite Endgerät 18 und ein Zurücksenden eines dritten angelernten Modells 24c von dem dritten Endgerät 20. Es erfolgt dann das Bewerten der jeweils angelernten Modelle 24a, 24b, 24c mittels der zentralen elektronischen Recheneirichtung 14 und das Anpassen des Hyperparameters β in Abhängigkeit von der Bewertung mittels der zentralen elektronischen Recheneinrichtung 14.

Insbesondere zeigt die Fig. 1 ferner, dass die zumindest zwei angelernten mathematischen Modelle 24a, 24b, 24c zu einem neuen mathematischen Modell, vorliegend erneut durch das anzulernende Modell 26 dargestellt, auf Basis eines weiteren Hyperparameters α aggregiert werden. Hierbei ist vorgesehen, dass das neue anzulernende mathematische Modell 26 dann zum Anlernen an zumindest die Endgeräte 16, 18, 20 erneut übertragen wird. Insbesondere kann der weitere Hyperparameter α auf Basis der übertragenen mathematischen Modelle 24a, 24b, 24c angepasst werden.

Als Hyperparameter α, β kann insbesondere ein Gewichtungsfaktor des mathematischen Modells 12 und/oder ein Übertragungshäufigkeit und/oder als Hypervektor bereitgestellt werden.

Insbesondere in Abhängigkeit der Hyperparameter α, β kann dann wiederum aus dem neuen mathematischen Modell 26 entweder dieses zurück an die Endgeräte 16, 18, 20 zurückgesendet werden, bis die entsprechende Iterationshäufigkeit bzw. Übertragungshäufigkeit abgeschlossen ist, oder zum mathematischen Modell 12 aggregiert werden, welches wiederum dem Endprodukt als angelerntes mathematisches Modell 12 entspricht.

Dabei kann ferner vorgesehen sein, dass der Hyperparameter α, β in Abhängigkeit von einem vorgegebenen Kommunikationsvolumen bestimmt wird. Ferner kann der Hyperparameter α, β in Abhängigkeit von dem vorgegebenen Veränderungswert für die Hyperparameter α, β angepasst werden.

Weiterhin kann vorgesehen sein, dass die Auswertung auf Basis einer Leistung des angelernten Modells 24a, 24b, 24c bewertet wird. Ferner kann die Leistung auf Basis eines Validierungsfehlers bewertet werden.

Insbesondere zeigt die Fig. 1, dass zu Beginn mehrere Hyperparametervektoren, insbesondere die Hyperparameter α und β, verwendet werden. Der Hyperparameter α ist dann wiederum der zentralen elektronischen Recheneinrichtung 14 zugewiesen und der Hyperparameter β ist den Endgeräten 16, 18, 20 zugewiesen und wird im lokalen Trainingsprozess verwendet. Es können dabei mehrere Konfigurationen erzeugt werden, d.h. die Hyperparameter α, β, ein Modellgewicht w und ein entsprechender Rundenzähler CT für jede Konfiguration. Ziel ist es dabei, das Modellgewicht W zu finden, das die beste Leistung erbringt.

In jeder Kommunikationsrunde wird nach dem Zufallsprinzip, insbesondere aufgrund von unterschiedlichen Verbindungskompetenzen der Endgeräte 16, 18, 20, eine Gruppe von Endgeräten 16, 18, 20 gewählt, als aktive Endgeräte 16, 18, 20, die ein lokales Training mit ihren Datensätzen 28, 30, 32 durchführen. Anschließend wird der Validierungsverlust des optimierten Modells auf den lokalen Validierungsdatensätzen als aufgezeichnet. Es wird der Hyperparameter β zu Beginn des Konfigurationstrainings abgestimmt, d.h. wenn der Rundenzähler der Konfiguration kleiner als ein Schwellwert ist, dann wird die entsprechende Anpassung durchgeführt, wobei der Hyperparameter β, welcher bei den lokalen Optimierungen schlecht abschneidet, eliminiert wird und durch eine veränderte Version vom Hyperparameter β mit einer besseren Leistung, insbesondere eine sogenannte Evolution, ersetzt wird. Dabei wird die Leistung durch den Validierungsverlust angegeben, d.h. je höher der Validierungsverlust ist, desto schlechter die Leistung. Es wird dabei eine Veränderung vom Hyperparameter β durchgeführt, indem eine kleine Zufallszahl dem Hyperparameter β hinzugefügt wird. Die Zufallszahl kann sich im Laufe des Trainingsprozesses verkleinern.

Es ist ferner somit eine weitere Funktion zum parametrisieren des weiteren Hyperparameters α vorgesehen, die verwendet wird, um sowohl den Hyperparameter β als auch den weiteren Hyperparameter α zu tunen. Hierbei ist vorgesehen, dass die Funktion aus globaler Sicht eine Optimierung durchführt, d.h. die Eliminierung von Störungen wird über verschiedene Konfigurationen hinweg durchgeführt. Wenn alle Konfigurationen für eine gewisse Anzahl an Durchgängen, optimiert wurden, dann wird wiederum das Tunen des weiteren Hyperparameters α durchgeführt. Hier werden nicht nur die Hyperparameter α und β angepasst, sondern auch ein angelerntes mathematisches Modell 24a, 24b, 24c mit einer schlechteren Leistung mit einem mit einer besseren Leistung ersetzt. Außerdem wird der Rundenzähler für die neuen Konfigurationen zurückgesetzt, was ihm die Möglichkeit gibt, in dem ersten Schritt die Hyperparameter β zu verbessern.

## Patentansprüche

1. Verfahren zum Anlernen eines mathematischen Modells (12) auf Basis eines verteilten Lernens mittels eines Anlernsystems (10), mit den Schritten:
- Bereitstellen eines anzulernenden mathematischen Modells (26) mittels einer zentralen elektronischen Recheneinrichtung (14) des Anlernsystems (10);
- Bereitstellen von zumindest einem Hyperparameter (β) zum Anlernen des anzulernenden mathematischen Modells (26) mittels der zentralen elektronischen Recheneinrichtung (14);
- Übertragen des anzulernenden mathematischen Modells (26) mit dem Hyperparameter (β) an zumindest ein erstes Endgerät (16) des Anlernsystems (10) und Übertragen des anzulernenden mathematischen Modells (26) mit dem Hyperparameter (β) an zumindest ein zum ersten Endgerät (16) separates zweites Endgerät (18) des Anlernsystems (10) mittels einer Übertragungseinrichtung (22) des Anlernsystems (10);
- Anlernen des anzulernenden mathematischen Modells (26) mit dem Hyperparameter (β) mit einem ersten Datensatz (28) des ersten Endgeräts (16) und Anlernen des anzulernenden mathematischen Modells (26) mit dem Hyperparameter (β) mit einem zweiten Datensatz (30) des zweiten Endgeräts (18);
- Übermitteln des jeweiligen angelernten mathematischen Modells (24a, 24b) von dem jeweiligen Endgerät (16, 18) an die zentrale elektronische Recheneinrichtung (14);
- Bewerten der jeweils angelernten mathematischen Modelle (24a, 24b) mittels der zentralen elektronischen Recheneinrichtung (14); und
- Anpassen des Hyperparameters (β) in Abhängigkeit von der Bewertung mittels der zentralen elektronischen Recheneinrichtung (14).

2. Verfahren nach Anspruch 1, **dadurch gekennzeichnet, dass** die zumindest zwei angelernten mathematischen Modelle (24a, 24b) mittels der elektronischen Recheneinrichtung (14) zu einem neuen anzulernenden mathematischen Modell (26) auf Basis eines weiteren Hyperparameters (α) aggregiert werden.

3. Verfahren nach Anspruch 2, **dadurch gekennzeichnet, dass** das neue anzulernende mathematischen Modell (26) zum Anlernen an zumindest das erste Endgerät (16) und das zweite Endgerät (18) übertragen wird.

4. Verfahren nach Anspruch 2 oder 3, **dadurch gekennzeichnet, dass**
der weitere Hyperparameter (α) auf Basis der übertragenen mathematischen Modelle (24a, 24b, 24c) angepasst wird.

5. Verfahren nach einem der vorhergehenden Ansprüche, **dadurch gekennzeichnet, dass**
als Hyperparameter (β) ein Gewichtungsfaktor im mathematischen Modell (12) und/oder eine Übertragungshäufigkeit des anzulernenden Modells (26) und/oder als Hypervektor bereitgestellt wird.

6. Verfahren nach einem der vorhergehenden Ansprüche, **dadurch gekennzeichnet, dass**
als ein weiterer Hyperparameter (α) ein Gewichtungsfaktor im mathematischen Modell (12) und/oder eine Übertragungshäufigkeit des anzulernenden mathematischen Modells (26) und/oder ein Hypervektor bereitgestellt wird.

7. Verfahren nach einem der vorhergehenden Ansprüche, **dadurch gekennzeichnet, dass**
der Hyperparameter (β) in Abhängigkeit von einem vorgegebenen Kommunikationsvolumen bestimmt wird.

8. Verfahren nach einem der vorhergehenden Ansprüche, **dadurch gekennzeichnet, dass**
bei einer Vielzahl von Endgeräten (16, 18, 20) eine zufällige Anzahl von Endgeräten (16, 18, 20) ausgesucht wird, welche das anzulernende mathematische Modell (26) anlernen.

9. Verfahren nach einem der vorhergehenden Ansprüche, **dadurch gekennzeichnet, dass**
zusätzlich der Hyperparameter (β) in Abhängigkeit von einem vorgegebenen Veränderungswert für den Hyperparameter (β) angepasst wird.

10. Verfahren nach einem der vorhergehenden Ansprüche, **dadurch gekennzeichnet, dass**
die Auswertung auf Basis einer Leistung des angelernten mathematischen Modells (24a, 24b, 24c) bewertet wird.

11. Verfahren nach Anspruch 10, **dadurch gekennzeichnet, dass** die Leistung auf Basis eines Validierungsfehlers bewertet wird.

12. Verfahren nach Anspruch 10, **dadurch gekennzeichnet, dass** als mathematisches Modell (12) eine künstliche Intelligenz angelernt wird.

13. Computerprogrammprodukt mit Programmcodemitteln, welche eine elektronische Recheneinrichtung (14) dazu veranlassen, wenn die Programmcodemittel von der elektronischen Recheneinrichtung (14) abgearbeitet werden, ein Verfahren nach einem der Ansprüche 1 bis 12 durchzuführen.

14. Computerlesbares Speichermedium mit zumindest dem Computerprogrammprodukt nach Anspruch 13.

15. Anlernsystem (10) zum Anlernen eines mathematischen Modells (12) auf Basis eines verteilten Lernens, mit zumindest einer zentralen elektronischen Recheneinrichtung (14), einem ersten Endgerät (16) und einem zweiten Endgerät (18), wobei das Anlernsystem (10) zum Durchführen eines Verfahrens nach einem der Ansprüche 1 bis 12 ausgebildet ist.
